# EUROPÄISCHE PATENTANMELDUNG

(11) **EP 1 516 980 A1**
(43) Veröffentlichungstag der Anmeldung: **23.03.2005**
(21) Anmeldenummer: 04450176.5
(22) Anmeldetag: 16.09.2004
(51) Int. Cl.: E04H 4/12

(54) **Wasser-Reinigungsanlage für Schwimmbecken**

(30) Priorität: 16.09.2003 AT 14512003
(71) Anmelder: Klugmayer, Josef, 3002 Purkersdorf (AT)
(72) Erfinder: Klugmayer, Josef, 3002 Purkersdorf (AT)
(74) Vertreter: Hehenberger, Reinhard, Dipl.-Ing.

(57) **Zusammenfassung**

Eine Reinigungsanlage für Wasser von Schwimmbecken weist eine Ansaugleitung (1), eine Pumpe (2), eine Rückleitung (5) zum Becken und eine in der Rückleitung (5) angeordneten Sandfilteranlage (4) auf. In der Ansaugleitung befindet sich vor der Pumpe (2) eine Einspeisestelle (7) für Luft. Durch die Anordnung der Einspeisestelle (7) für die Luft vor der Pumpe (2) und der Sandfilteranlage (4) erfolgt eine sehr feine Verteilung der Luft im Wasser und eine sehr gute Reinigung des Wassers.

## Beschreibung

Die Erfindung betrifft eine Reinigungsanlage für Wasser von Schwimmbecken mit einer Ansaugleitung, einer Pumpe, einer Rückleitung zum Becken, einer in der Rückleitung angeordneten Sandfilteranlage und mit einer Einspeisestelle für Sauerstoff in das Leitungssystem.

Eine derartige Reinigungsanlage ist aus der DE 101 27 412 A1 bekannt. Bei dieser Anlage wird das zu reinigende Wasser über eine Pumpe aus dem Becken angesaugt, anschließend durch eine biologische Filteranlage gepumpt und wieder in das Becken zurückgeleitet. Zwischen der Pumpe und der Filteranlage befindet sich eine Einspeisestelle für Sauerstoff.

Der Erfindung liegt die Aufgabe zu Grunde, eine Reinigungsanlage für Wasser von Schwimmbädern zur Verfügung zu stellen, die sehr einfach und zuverlässig arbeitet.

Gelöst wird diese Aufgabe mit einer Reinigungsanlage mit den Merkmalen des Anspruches 1.

Weitere bevorzugte Ausführungsformen der Erfindung sind Gegenstand der Unteransprüche.

Bei der Erfindung wird die Luft durch die Saugkraft der Wasserpumpe mit angesaugt, mischt sich in der Wasserumpe gut mit dem Wasser und wird über die Leitung in den Sandfilterbehälter gepumpt. Da die Luft bereits vor der Pumpe und dem Sandfilter angesaugt wird, erfolgt eine sehr feine Verteilung der Luft im Wasser, was für die Funktion der Reinigungsanlage wesentlich ist.

Nachfolgend wird ein bevorzugtes Ausführungsbeispiel der Erfindung unter Bezugnahme auf die anliegende Zeichnung näher beschrieben.

Bei der erfindungsgemäßen Reinigungsanlage wird Wasser über eine Ansaugleitung 1 von einer Pumpe 2 aus einem Bad oder Becken angesaugt. Angetrieben wird die Pumpe 2 mit einem Motor 3. Die Pumpe 2 pumpt das Wasser über eine Rückleitung 5 durch eine Sandfilteranlage 4 und wieder zurück in das Becken.

An einer Einspeisestelle 6 für Luft, die durch ein T-Stück 7 gebildet wird und vor der Pumpe 2 liegt, ist eine Düse 8 angebracht, die über ein Wasserrückschlagrohr 9 mit einem Luftventil 10 verbunden ist. Über das Ventil 10 kann die Menge der angesaugten Luft gesteuert werden. Die Mündung 11 der Düse 8 befindet sich in der Höhe des oberen Rohrbereichs des T-Stücks 7 und somit etwa im Wandbereich der Ansaugleitung 1. Bevorzugt ist die Mündung 11 der Düse 8 schlitzförmig ausgeführt, wobei der Schlitz quer zur Strömungsrichtung des Wassers ausgerichtet ist. Das Ventil 10 bzw. dessen Ansaugöffnung'12 ist idealerweise höher als der Wasserspiegel im Bad oder Becken angebracht, wodurch das Ventil 10 beim Abschalten der Pumpe 2 nicht geschlossen werden muss. Falls die Öffnung 12 tiefer als der Wasserspiegel im Bad oder Becken liegt, muss das Ventil, vorzugsweise ein Magnetventil, vor dem Abschalten der Pumpe 2 geschlossen und nach dem Einschalten der Pumpe 2 wieder geöffnet werden.

Die Luft wird durch die Saugkraft der Wasserpumpe 2 angesaugt, mischt sich mit dem Wasser und wird über die Leitung 5 in den Sandfilterbehälter der Sandfilteranlage 4 gepumpt. Im Sandfilterbehälter soll ein Druck von etwa 0,5 bis 1 bar herrschen. Die Luft und das Wasser werden durch den Filtersand gepresst und gelangen über die Rückleitung 5 zum Schwimmbad zurück. Sichtbare Restluft wird mit dem Wasser durch die Rückleitung 5 in das Schwimmbad geleitet, wodurch Wasserblasen erkennbar sind.

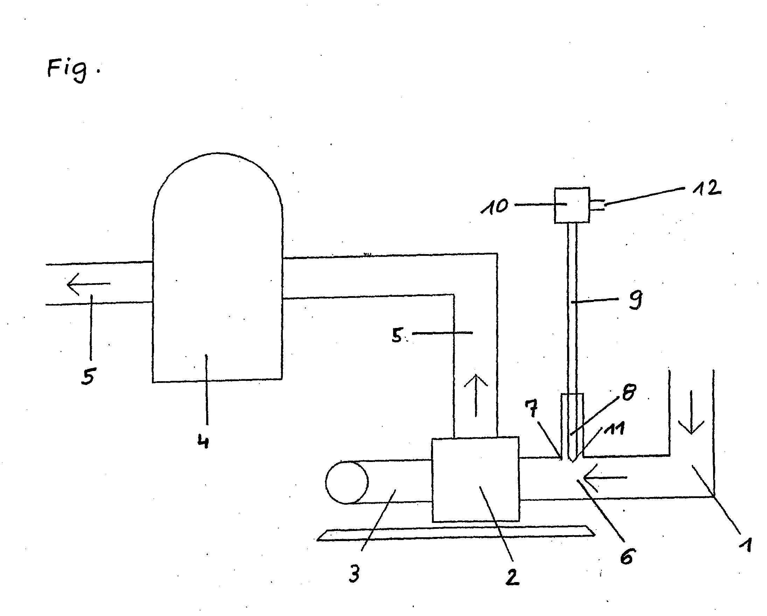

## Patentansprüche

1. Reinigungsanlage für Wasser von Schwimmbecken mit einer Ansaugleitung (1), einer Pumpe (2), einer Rückleitung (5) zum Becken, einer in der Rückleitung (5) angeordneten Sandfilteranlage (4) und mit einer Einspeisestelle (7) für Sauerstoff in das Leitungssystem, **dadurch gekennzeichnet, dass** sich die Einspeisestelle (7) für den Sauerstoff enthaltende Luft in Strömungsrichtung des Wassers gesehen vor der Pumpe (2) befindet.

2. Reinigungsanlage nach Anspruch 1, **gekennzeichnet durch** eine an der Einspeisestelle (7) in die Ansaugleitung (1) mündende Düse (8), **durch** welche die Luft eingebracht wird.

3. Reinigungsanlage nach Anspruch 2, **dadurch gekennzeichnet, dass** sich die Mündung (11) der Düse (8) im Wandbereich der Ansaugleitung (1) befindet.

4. Reinigungsanlage nach einem der Ansprüche 1 bis 3, **dadurch gekennzeichnet, dass** die Düse (8) im Bereich eines T-Stücks (7) in die Ansaugleitung (1) mündet.

5. Reinigungsanlage nach einem der Ansprüche 2 bis 4, **dadurch gekennzeichnet, dass** die Düse (8) mit einer Ansaugöffnung (12) für Luft verbunden ist, die höher als der Wasserspiegel im Becken liegt.

6. Reinigungsanlage nach Anspruch 5, **dadurch gekennzeichnet, dass** die Düse (8) über ein Luftventil (10) mit der Ausgangsöffnung (12) verbunden ist.

7. Reinigungsanlage nach Anspruch 6 , **dadurch gekennzeichnet, dass** die Düse (8) über ein Rohr (9) mit dem Ventil (10) verbunden ist.
